Europäisches Patentamt

**European Patent Office**

Office européen des brevets

(19)

(11) Veröffentlichungsnummer: **0 118 118**
**B1**

(12)

# EUROPÄISCHE PATENTSCHRIFT

(45) Veröffentlichungstag der Patentschrift:
**03.06.87**

(21) Anmeldenummer: **84102232.0**

(22) Anmeldetag: **02.03.84**

(51) Int. Cl.⁴: **B 60 T 7/04, B 60 T 13/24,**
**F 16 B 7/20**

(54) Anordnung zur Befestigung eines Bremskraftverstärkers.

(30) Priorität: **05.03.83 DE 3307887**

(43) Veröffentlichungstag der Anmeldung:
**12.09.84 Patentblatt 84/37**

(45) Bekanntmachung des Hinweises auf die Patenterteilung:
**03.06.87 Patentblatt 87/23**

(84) Benannte Vertragsstaaten:
**DE FR GB IT SE**

(56) Entgegenhaltungen:
**FR - A - 2 018 046**
**US - A - 2 645 438**
**US - A - 3 014 740**
**US - A - 3 714 780**

(73) Patentinhaber: **Adam Opel Aktiengesellschaft,**
**Bahnhofsplatz 1 Postfach 1560, D-6090 Rüsselsheim**
**(DE)**

(72) Erfinder: **Friese, Dieter, Kriemhildring 3,**
**D-6234 Hattersheim 2 (DE)**
Erfinder: **Wild, Rolf, Grundweg 321, D-6090 Rüsselsheim**
**(DE)**

(74) Vertreter: **Baumgarten, Jochem, Dipl.-Ing. et al, C/O**
**Adam Opel Aktiengesellschaft**
**Bahnhofsplatz 1 Postfach 1560, D-6090 Rüsselsheim**
**(DE)**

## Beschreibung

Die Erfindung bezieht sich auf eine Anordnung zur lösbaren Befestigung eines mit seiner Kolbenstange mit dem Bremspedal verbundenen Bremskraftverstärkers oder dgl. an der Stirnwand beziehungsweise an einer in diese eingesetzten Schliessplatte eines Kraftfahrzeuges.

Die Befestigung des Bremskraftverstärkers an der Stirnwand erfolgt nach der US-A 3 714 780 dadurch, dass der Bremskraftverstärker mittels Gewindebolzen und Muttern an einer Schliessplatte angeschraubt wird. Dies erfordert, dass die Schraubverbindung zwischen Schliessplatte und Stirnwand oder bei direkter Anbringung des Bremskraftverstärkers an der Stirnwand die Verschraubung zwischen Bremskraftverstärker und Stirnwand im Fahrzeuginnenraum vorgenommen werden muss, was wegen der schlecht zugänglichen Lage der Verbindungsstelle als sehr nachteilig empfunden wird. Man könnte natürlich die Anordnung auch so treffen, dass die Schraubverbindung in einfacher Weise von aussen, also vom Motorraum aus vorgenommen wird. Dazu ist aber ein bestimmter Platzbedarf erforderlich, der mitunter, insbesondere bei einem querliegenden Antriebsaggregat und besonders bei Rechtslenkung nicht gegeben ist. Ein mittels Schraubenbolzen befestigter Bremskraftverstärker ist auch nur in umständlicher Weise zu demontieren bzw. auszutauschen. In dem Bestreben einer rationellen, insbesondere maschinellen Fertigung muss das an schwer zugänglicher Stelle vorzunehmende Anschrauben des Bremskraftverstärkers in jedem Falle vermieden werden. Dies gilt insbesondere dann, wenn andere Montagearbeiten an benachbarten, ebenfalls schwer zugänglichen Teilen dadurch erleichtert werden, dass man Einbaueinheiten vorfertigt.

Der Erfindung liegt die Aufgabe zugrunde eine Verbindung des Bremskraftverstärkers mit der Stirnwand zu schaffen, die ohne Werkzeuge von gut zugänglicher Seite herstellbar und auch wieder lösbar ist. Es ist dazu kein grösserer Platzbedarf notwendig und die Verbindung erfolgt auch nicht an schwer zugänglicher Stelle im Fahrzeuginnenraum.

Erfindungsgemäss wird dies dadurch erreicht, dass am Bremskraftverstärker od. dgl. und an der Stirnwand bzw. an der Schliessplatte Mittel für einen ohne Werkzeug herstellbare und wieder lösbare Verbindung von Bremskraftverstärker und Stirnwand vorgesehen sind, wobei die Mittel aus am Bremskraftverstärker und an der Stirnwand bzw. der Schliessplatte vorgesehenen büchsenförmigen Ansätzen bestehen, an denen Hinterschneidungen für die lösbare Verbindung vorgesehen sind.

Zweckmässig sind die Hinterschneidungen als Bajonettverbindung, als Gewindeabschnitte für eine Schraubverbindung oder als Ansätze und Vertiefungen für eine Schnappverbindung ausgebildet. Hierunter ist natürlich jede ohne Werkzeug herstellbare Verbindung zu verstehen. Dies soll in vorteilhafter Weise staub- und feuchtigkeitsdicht sein, was natürlich eine geschlossene Ausbildung der Ansätze voraussetzt. Die Verbindungsstelle kann natürlich auch unmittelbar am Bremskraftverstärker oder an der Stirnwand vorgesehen sein, wobei die jeweiligen Verbindungsmittel und/oder die Ansätze einstückig mit dem Bremskraftverstärker bzw. der Stirnwand verbunden sein können. Die erfindungsgemässen Massnahmen sind auch anwendbar, wenn anstelle eines Bremskraftverstärkers eine Antiblockiervorrichtung vorgesehen ist.

Eine Ausbildung der büchsenförmigen Ansätze für eine äusserst einfache Montage ergibt sich dann, wenn nach einem weiteren Merkmal der Erfindung die büchsenförmigen Ansätze je einen unter- und oberhalb einer durch die Mittellinie gehenden etwa waagerechten Ebene liegenden Abschnitt bilden und der obere Abschnitt mit dem Bremsverstärker und der untere Abschnitt mit der Stirnwand verbunden ist und jeder Abschnitt mit dem ihm gegenüberliegenden Teil (Stirnwand, Bremskraftverstärker) eine Verbindung bildet. Auf diese Weise braucht der Bremskraftverstärker zum Zwecke der Verbindung nicht gedreht zu werden. Durch die Teilung der Ansätze längs der Mittellinie kann der Bremskraftverstärker in einer für die automatische Montage günstigen Weise schon frühzeitig an dem mit der Stirnwand verbundenen Ansatz geführt und so in die Verbindungsstellung bewegt werden.

Anhand der Zeichnung werden Ausführungsbeispiele der Erfindung näher erläutert.
Es zeigen:

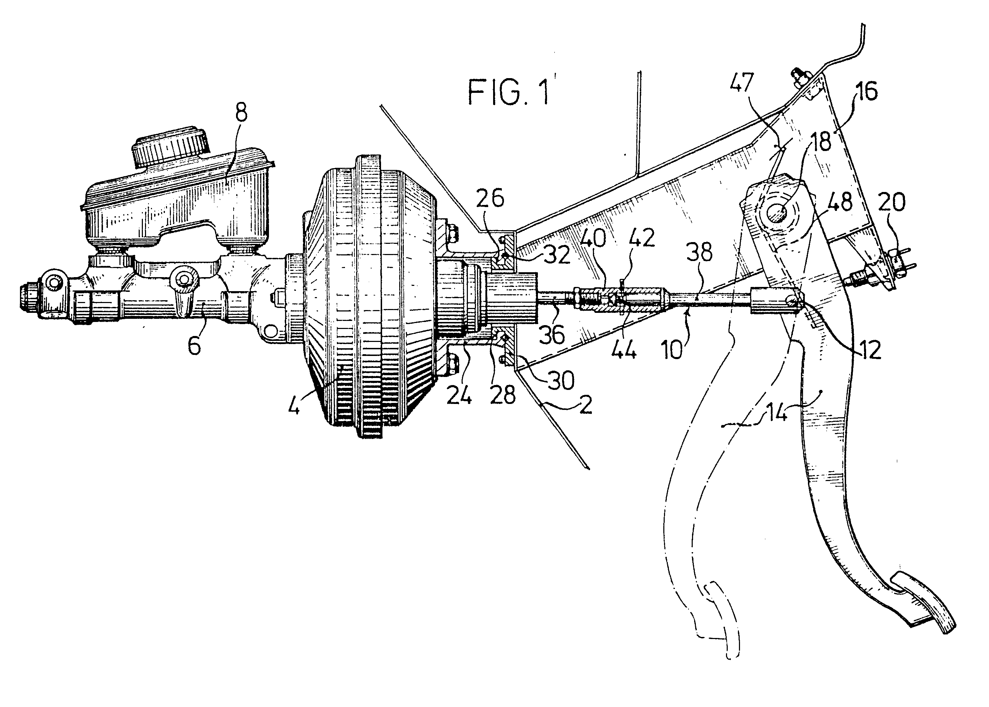

Fig. 1 die Anordnung des Bremskraftverstärkers an der Stirnwand mit Bremspedal u. dgl.

Fig. 2 eine weitere Ausführungsform der Befestigung des Bremskraftverstärkers an der Stirnwand bzw. der Schliessplatte.

An der Stirnwand 2 eines Kraftfahrzeuges ist der Bremskraftverstärker 4 mit Hauptbremszylinder 6 und Ausgleichbehälter 8 befestigt. Die insgesamt mit 10 bezeichnete Kolbenstange des Bremskraftverstärkers 4 ist mittels eines Bolzens 12 in bekannter Weise am Bremspedal 14 angelenkt. Das Bremspedal 14 wiederum ist an dem Pedalbock 16 mittels eines Bolzens 18 schwenkbar gelagert. Am Pedalbock 16, der nur schematisch angedeutet ist und an dem sich auch die nicht dargestellten Gas- und Kupplungspedale befinden, ist auch der Bremslichtschalter 20 angebracht. Die Ausgangsstellung des Bremspedals 14 ist in ausgezogenen und die Bremsstellung in strichpunktierten Linien dargestellt.

Der Bremskraftverstärker 4 ist mit einem büchsenförmigen Ansatz 24 versehen, an dessen freiem Ende Hinterschneidungen 26 vorgesehen sind, die mit Hinterschneidungen 28 eines an der Stirnwand 2 befestigten Ansatzes 30 im Sinne eines Bajonettverschlusses zusammen wirken. Die büchsenförmigen Ansätze 24 und 30 können mit dem Bremskraftverstärker 4 bzw. mit der Stirnwand 2 wie dargestellt durch Schrauben oder durch Nieten oder in jeder anderen geeigneten Weise verbunden sein. Die Ansätze 24 und 30 können auch unmittelbar an dem Bremskraftverstärker 4 bzw. an der Stirnwand 2 einstückig angeformt sein. Innerhalb des Bajonettverschlusses ist eine Dichtung 32 vorgesehen.

Der Bremskraftverstärker 4 kann mittels des Bajonettverschlusses ohne Werkzeug an der Stirnwand 2 befestigt und auch wieder abgenommen werden. Anstelle der Hinterschneidungen 26, 28 können an den Ansätzen 24, 30 auch Gewindeabschnitte für eine werkzeuglose Schraubverbindung oder Ansätze und Vertiefungen für eine Schnappverbindung vorgesehen sein. Wie aus der Zeichnung ersichtlich, besitzt der Ansatz 24 am Bremskraftverstärker 4 eine grössere axiale Länge als der Ansatz 30. Dies kann auch umgekehrt sein. Die Hinterschneidungen 26 bzw. 28 od. dgl. können auch jeweils direkt am Bremskraftverstärker 4 oder an der Stirnwand 2 angeordnet sein. Die Ansätze 24 und 30 können auch gleiche Länge besitzen.

Die Kolbenstange 10 des Bremskraftverstärkers 4 besteht aus den beiden Teilen 36 und 38, von denen das Teil 36 vor dem Einbau des Bremskraftverstärkers 4 mit diesem bereits verbunden ist. Das Teil 38 befindet sich am Bremspedal 14. Das Teil 36 ist mit einer in axialer Richtung einstellbaren Hülse 40 versehen, die mit einer durch einen Schlitz hindurchgreifenden Rastfeder 42 versehen ist. Das Teil 38 besitzt nahe seinem vorderen konischen Ende eine umlaufende Nut 44. Bei der Montage des Bremskraftverstärkers 4 ist das Bremspedal 14 bereits mit dem Teil 38 der Kolbenstange 10 versehen, das durch eine Hilfsvorrichtung irgendwelcher Art etwa in der Richtung gehalten wird, die es später in verbundener Lage mit dem Teil 36 einnimmt.

Die Anordnung kann abweichend von der Zeichnung auch so getroffen sein, dass das Teil 38 durch die Öffnung in der Stirnwand 2 nach vorne hindurch ragt. Der Bremskraftverstärker 4 wird nun so an seine Befestigungsstelle herangeführt, dass sich das Teil 36 mit der Hülse 40 auf das Teil 38 aufschiebt. In der Endstellung rastet die Rastfeder 42 an der Hülse 40 in die Nut 44 des Teiles 38 ein, so dass die Teile 36 und 38 verbunden sind, ohne dass dabei eine Verbindung an schwer zugänglicher Stelle von Hand vorgenommen werden muss. Die Längeneinstellung der Hülse 40 kann vorher entsprechend vorgenommen werden. Die Montage kann in der Praxis mit einer Vorrichtung erfolgen, in die der Bremskraftverstärker 4 mit dem büchsenförmigen Ansatz 24 und dem auf die genaue Länge eingestellten hülsenförmigen Teil 40 eingelegt wird. Die Vorrichtung wird dann an die Stirnwand herangefahren. Während des Kuppelns der Teile 36 und 38 der Kolbenstange 10 wird das Teil 38 durch eine nicht dargestellte Vorrichtung in seiner Längsrichtung unverschiebbar gehalten, und zwar in einer solchen Lage, dass beim Kuppeln die Kolbenstange 10 in den Bremskraftverstärker zurückgedrückt wird. Nach dem Kuppeln wird nach Lösen der Vorrichtung die Kolbenstange durch die Federkraft des Bremskraftverstärkers so verschoben, dass der im Pedalblock 16 befestigte Bremslichtschalter 20 funktionsgerecht eingestellt wird.

Das Zusammenführen der beiden Teile 36 und 38 lässt sich vermeiden, wenn die Verbindung in den Bremskraftverstärker 4 hineinverlegt wird und die Kolbenstange 10 bei der Montage des Bremskraftverstärkers 4 bereits ein einziges Teil bildet. Das vordere Ende der Kolbenstange verrastet dabei mit dem Steuerkolben bzw. der Druckstange des Bremskraftverstärkers 4.

Eine Haarnadelfeder 48, deren eines Ende sich gegen einen Anschlag 47 am Pedalblock 16 legt, wirkt mit ihrem anderen Ende gegen den Bolzen 12, mit dem die Kolbenstange 10 am Bremspedal 14 angelenkt ist. Dadurch wird die Kolbenstange 10 in Richtung auf den Bremskraftverstärker 4 zugedrückt und somit das Spiel in der Verbindung 42, 44 der Teile 36 und 38 sowie im Bremskraftverstärker 4 selbst ausgeglichen. Diese Feder 48 ist natürlich schwächer als der im Bremskraftverstärker 4 entgegengesetzt wirkende Federdruck. Da die Bewegung der Kolbenstange 10 innerhalb des Bremskraftverstärkers 4 begrenzt ist, erübrigt sich ein Anschlag für das Bremspedal 14, wie er bisher üblich war, als eine Feder auf das Bremspedal 14 in Richtung von Bremskraftverstärker 4 weg eingewirkt hat.

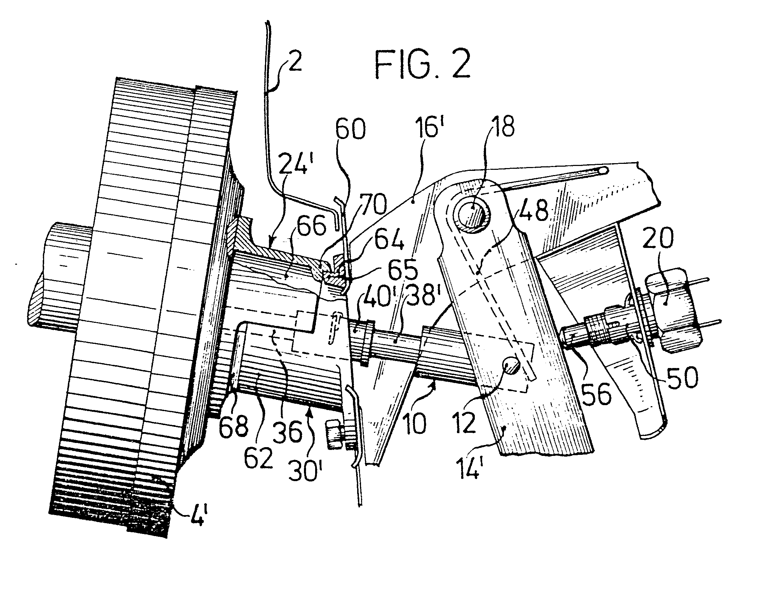

Die erfindungsgemässe Anordnung ist insbesondere dann von Vorteil, wenn Pedalblock 16, die Lenkungskonsole sowie weitere Teile, wie z.B. die gesamte Armaturentafel als vorgefertigte Einheit hergestellt und an der Stirnwand befestigt wird. Dann befinden sich die hülsenförmigen Ansätze 30' an einer mit dem Pedalblock verbundenen, eine Durchbrechung in der Stirnwand 2 verschliessenden Schliessplatte 60 (Fig. 2). Die Schliessplatte 60 ist hier von hinten gegen eine Öffnung in der Stirnwand 2 gefahren. Die Schliessplatte 60 ist mit dem mit 16' bezeichneten Pedalbock verbunden.

Am Pedalbock 16' ist das Bremspedal 14' mittels des Bolzens 18 gelagert. Die Feder 48 wirkt wieder auf den Bolzen 12 ein, mit dem die Kolbenstange 10 am Bremspedal 14' angelenkt ist. Die Schliessplatte 60 ist mittels nicht dargestellter Bolzen mit der Stirnwand 2 verbunden. An der Schliessplatte 60 ist der Ansatz 30' angeordnet, der in jeder geeigneten Art mit der Schliessplatte 60 verbunden sein kann. Der Ansatz 30' bildet hier einen halbkreisförmigen vorspringenden Abschnitt 62 und einen kurzen Abschnitt 64, der mit Verbindungsmitteln, z.B. nur andeutungsweise dargestellten Rastmitteln 65 versehen ist.

Der Ansatz 24' am Bremskraftverstärker 4' besitzt ebenfalls einen halbkreisförmigen Abschnitt 66, der oberhalb des Abschnittes 62 des Ansatzes 30' zu liegen kommt. Ein kurzer Abschnitt 68 ist ebenfalls mit Rastmitteln versehen. Rastmittel 70 sind auch jeweils am äusseren Ende der Abschnitte 62 und 66 vorgesehen, die mit den Rastmitteln 65 der kurzen Abschnitte 64 und 68 in Verbindung kommen. Die zueinander liegenden Flächen der Abschnitte 62 und 66 bilden Führungen, so dass bei der Montage des Bremskraftverstärkers 4' der Abschnitt 66 auf den Abschnitt 62 aufgesetzt und geführt an das Rastmittel 65 heran bewegt werden kann. Anstelle der Rastmittel 65 und 70 können auch andere Verbindungsmittel vorgesehen sein.

**Patentansprüche**

1. Anordnung zur lösbaren Befestigung eines mit seiner Kolbenstange (10) mit dem Bremspedal (14) verbundenen Bremskraftverstärkers (4) od. dgl. an der Stirnwand (2) bzw. an einer in diese eingesetzten Schliessplatte (60) eines Kraftfahrzeuges, dadurch gekennzeichnet, dass am Bremskraftverstärker (4) od. dgl. und an der Stirnwand (2) bzw. an der Schliessplatte (60) Mittel für eine ohne Werkzeug herstellbare und wieder lösbare Verbindung von Bremskraftverstärker (4) und Stirnwand (2) vorgesehen sind, wobei die Mittel aus am Bremskraftverstärker (4) und an der Stirnwand (2) bzw. der Schliessplatte (60) vorgesehenen büchsenförmigen Ansätzen (24, 30) bestehen, an denen Hinterschneidungen (26, 28) für die lösbare Verbindung vorgesehen sind.

2. Anordnung nach Anspruch 1, dadurch gekennzeichnet, dass die Hinterschneidungen (26, 28) als Bajonettverbindung, als Gewindeabschnitte für eine werkzeuglose Schraubverbindung oder als Ansätze und Vertiefungen für eine Schnappverbindung ausgebildet sind.

3. Anordnung insbesondere nach Anspruch 1 und 2, dadurch gekennzeichnet, dass die büchsenförmigen Ansätze (24', 30') je einen unter- und oberhalb einer durch die Mittellinie gehenden etwa waagerechten Ebene liegenden Abschnitt (62, 66) bilden und der obere Abschnitt (66) mit dem Bremskraftverstärker (4) und der untere Abschnitt (62) mit der Schliessplatte (60) verbunden ist und jeder Abschnitt (62, 66) mit dem ihm gegenüberliegenden Teil (64, 68) eine Verbindung bildet.

4. Anordnung nach Anspruch 3, dadurch gekennzeichnet, dass die beiden Abschnitte (62, 66) an ihren Längskanten gegeneinander verschiebbar geführt sind.

5. Anordnung nach Anspruch 1 bis 4, dadurch gekennzeichnet, dass die Verbindungen feuchtigkeits- und staubdicht ausgeführt sind.

6. Anordnung nach Anspruch 1 bis 5, dadurch gekennzeichnet, dass die büchsenförmigen Ansätze (24, 30) mit dem Bremskraftverstärker (4) bzw. der Stirnwand (2) durch Schrauben, Nieten, Schweissen od. dgl. verbunden sind.

7. Anordnung nach Anspruch 1 bis 5, dadurch gekennzeichnet, dass die büchsensförmigen Ansätze (24, 30) am Bremskraftverstärker (4) bzw. an der Stirnwand (2) einstückig angeformt sind.

**Claims**

1. Arrangement for releasably mounting a servo unit for brakes (4) or the like, which is connected by its piston rod (10) to the brake pedal (14), on the dashboard (2) or on a closure panel (60) inserted in the latter, in a motor vehicle, characterised in that on the brake servo unit (4) or the like and on the dashboard (2) or closure panel (60) are provided means for releasably connecting brake servo unit (4) and dashboard (2) without tools, the means consisting of bush-like extensions (24, 30) which are provided on the brake servo unit (4) and on the dashboard (2) or closure panel (60) and on which undercut regions (26, 28) are provided for the releasable connection.

2. Arrangement according to claim 1, characterised in that the undercut regions (26, 28) are constructed as a bayonet lock, as threaded portions for screw connection without tools, or as projections and recesses for a snap-action connection.

3. Arrangement in particular according to claims 1 and 2, characterised in that the bush-like extensions (24', 30') each form a portion (62, 66) located above and below an approximately horizontal plane passing through the centre line, the upper portion (66) is connected to the brake servo unit (4) and the lower portion (62) is connected to the closure panel (60), and each portion (62, 66) forms a connection with the portion (64, 68) opposite it.

4. Arrangement according to claim 3, characterised in that the two portions (62, 66) are slidable relative to each other at their longitudinal edges.

5. Arrangement according to claims 1 to 4, characterised in that the connections are moisture-resistant and dust-resistant.

6. Arrangement according to claims 1 to 5, characterised in that the bush-like extensions (24, 30) are connected to the brake servo unit (4) and the dashboard (2) by bolting, riveting, welding ort the like.

7. Arrangement according to claims 1 to 5, characterised in that the bush-like extensions (24, 30) are formed integrally on the brake servo unit (4) and on the dashboard (2).

**Revendications**

1. Dispositif pour la fixation amovible d'un amplificateur de force de freinage (4) ou analogue relié à la pédale de frein (14) par l'intermédiaire de sa tige de piston (10), sur la paroi frontale (2) d'un véhicule ou sur une plaque (60) d'obturation placée dans cette paroi, caractérisé en ce que sur l'amplificateur de force de freinage (4) ou analogue, et sur la paroi frontale (2) ou sur la plaque (60) d'obturation, des moyens sont prévus pour réaliser une connexion amovible qui peut être établie et supprimée sans outil, entre l'amplificateur de force de freinage (4) et la paroi frontale (2), les moyens étant constitués par des embouts (24, 30) en forme de manchon, prévus sur l'amplificateur de force de freinage (4) et sur la paroi (2) frontale ou sur la plaque (60) d'obturation et munis de parties en contre-dépouille (26, 28) pour la connexion amovible.

2. Dispositif selon la revendication 1, caractérisé en ce que les parties en contre-dépouille (26, 28) sont conçues sous la forme de connexion à baillonnette, de tronçons filetés pour une

connexion vissée sans outil ou comme saillies et creux pour une connexion à encliquetage.

3. Dispositif, en particulier selon revendication 1 et 2, caractérisé en ce que les embouts (24', 30') en forme de manchon forment chacun un segment (62, 66) situé au-dessus et en-dessous d'un plan à peu près horizontal passant par la ligne médiane, que le segment (66) supérieur est relié à l'amplificateur de force de freinage (4) et le segment (62) inférieur est relié à la plaque (60) d'obturation, chaque segment (62, 66) constituant une connexion avec la partie (64, 68) qui lui est opposée.

4. Dispositif selon revendication 3, caractérisé en ce que les deux segments (62, 66) sont guidés coulissants l'un par rapport à l'autre sur leurs arêtes longitudinales.

5. Dispositif selon revendication 1 à 4, caractérisé en ce que les connexions sont réalisées sous forme étanche à l'humidité et à la poussière.

6. Dispositif selon revendication 1 à 5 caractérisé en ce que les embouts (24, 30) en forme de manchon sont reliés à l'amplificateur de force de freinage (4) et à la paroi frontale (2) par vissage, rivetage, soudage ou analogue.

7. Dispositif selon revendication 1 à 5, caractérisé en ce que les embouts (24, 30) en forme de manchon sont formés intégralement avec l'amplificateur de force de freinage (4) et la paroi frontale (2).

FIG. 1

0118118

FIG. 2